Europäisches Patentamt

(19) European Patent Office

Office européen des brevets

(11) Publication number: **0 155 337**
**B1**

(12) **EUROPEAN PATENT SPECIFICATION**

(45) Date of publication of patent specification: **19.07.89**

(21) Application number: **84103389.7**

(22) Date of filing: **27.03.84**

(51) Int. Cl.⁴: **B 29 C 67/20, B 29 D 7/00,**
**B 29 D 23/00 // B29K27:18,**
**B29K105:04**

(54) Method and apparatus for manufacturing porous polytetrafluoroethylene material.

(43) Date of publication of application:
**25.09.85 Bulletin 85/39**

(45) Publication of the grant of the patent:
**19.07.89 Bulletin 89/29**

(84) Designated Contracting States:
**DE FR GB**

(56) References cited:
**EP-A-0 087 149**
**DE-A-2 614 258**
**JP-A-13 056 067**
**US-A-4 049 589**

**DERWENT JAPANESE PATENTS GAZETTE, 7th**
**August 1978, Week A 26, Section Chemical,**
**page 11, no. 46540A/26, Derwent Publications;**
**& JP-A-53 055 378 (NITTO ELECTRIC IND. K.K.)**
**19-05-1978**

(73) Proprietor: **SUMITOMO ELECTRIC INDUSTRIES**
**LIMITED**
**No. 15, Kitahama 5-chome Higashi-ku**
**Osaka-shi Osaka 541 (JP)**

(72) Inventor: **Okita, Koichi c/o Osaka Works**
**Sumitomo Elec. Ind. Ltd. 1-3, Shimaya 1-chome**
**Konohana-ku Osaka-shi Osaka (JP)**
Inventor: **Toyooka, Shinichi c/o Osaka Works**
**Sumitomo Elec. Ind., Ltd. 1-3, Shimaya 1-chome**
**Konohana-ku Osaka-shi Osaka (JP)**
Inventor: **Asako, Shigeru c/o Osaka Works**
**Sumitomo Elec. Ind., Ltd. 1-3, Shimaya 1-chome**
**Konohana-ku Osaka-shi Osaka (JP)**
Inventor: **Yamada, Katsuya c/o Osaka Works**
**Sumitomo Elec. Ind., Ltd. 1-3, Shimaya 1-chome**
**Konohana-ku Osaka-shi Osaka (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

EP 0 155 337 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method for manufacturing a porous polytetrafluoroethylene material with high mechanical strength and more particularly to improvement in the economization of energy required for steps for removing a liquid lubricant, stretching and sintering the article.

The invention also relates to an apparatus for use in such method.

A porous polytetrafluoroethylene (hereinafter referred to "PTFE") material takes advantage of excellent heat resistance, chemical resistance, electric insulation and repellency of PTFE and is used in various filters, diaphragms and other waterproof gas-permeable materials, insulating materials for cables and sealing materials or the like.

Various methods for manufacturing a porous PTFE material have been well known. Among others, what is commercially appealing to the market is a stretching process for making porous PTFE whose basic idea is disclosed in Japanese Patent Publication No. 13560/67. In the first step of the process, powdered PTFE and a liquid lubricant are mixed and the mixture is shaped by a paste extrusion and a calender rolling or a combination thereof to obtain an unsintered molded article in the form of a film, tube or a rod and the like. The second and subsequent steps comprise (1) eliminating the liquid lubricant contained in the molded article by evaporation or extraction, (2) rendering the molded article porous by stretching, and (3) sintering the porous article at a temperature higher than the melting point of PTFE to fix the porous structure. The reason why the second and subsequent steps are thus subdivided is as follows.

Stretching of molded PTFE containing a liquid lubricant at a temperature heretofore employed (from room temperature to a temperature lower than the crystalline melting point of PTFE) fails to lead to uniform stretching due to the action of interfacial tension of the liquid lubricant and give rise to a porous structure heterogeneous in pore size distribution. The sintering step must be carried out at a temperature higher than the crystalline melting point of PTFE. However, this step has been taken separately from the stretching step since the stretching has heretofore been carried out mostly at a temperature lower than the crystalline melting point of PTFE.

It has been customary to device the process into unit steps to be carried out at different temperatures and different speeds, thus required much time and energy for processing and wasting much labor.

DE—A—2614258 discloses an apparatus comprising a hot furnace including a double cylinder piped furnace of an inner cylinder part through which a molded material passes and an outer cylinder part in which a heater is incorporated, said two cylinder parts being coupled to one another by the both ends thereof, means for circulating hot air through said two cylinder parts, means for adjusting an inflow of the air at an inlet and an outlet of the furnace, and means for forcibly exhausting a portion of the furnace hot air. This apparatus may be used to give a heat and stretch treatment to plastic articles.

It is the technical problem unerlying the present invention to provide an economically improved method for the manufacturing of porous PTFE which enables the saving of time and energy.

Another technical problem underlying the present invention is to provide an apparatus for manufacturing PTFE which is more economical in use than the known ones and, accordingly, enables the saving of manufacturing time and energy.

As a result of extensive researches with respect temperature, speed and other operative conditions in the stretching and sintering steps, it has been found that when an unsintered PTFE molded material containing a liquid lubricant is stretched at a temperature of not lower than 390°C under the conditions under which a temperature distribution is precisely controlled, removal of the lubricant by evaporation can proceed simultaneously with stretching and sintering can also be carried out simultaneously with stretching after sintering. Through further researches on the conditions under which the steps are readily carried out, it has now been found that the method of the present invention can proceed advantageously by employing an oven circulating hot air as a control system for temperature distribution and providing in the furnace a catalyst which facilitates the combustion of the vaporized lubricant.

The present invention is based on the above findings and provides, on the one hand, a method for manufacturing a porous polytetrafluoroethylene material, comprising extruding and/or rolling an unsintered polytetrafluoroethylene mixture containing a liquid lubricant, and next carrying out the steps of a) evaporating the liquid lubricant, b) stretching the molded articles in an unsintered condition, and c) sintering the same in a stretched condition, characterized in that the above-mentioned steps a)—c) are carried out simultaneously, that there is an additional simultaneous step of d) stretching the molded articles in a sintered condition and that all steps a)—d) are carried out at an atmospheric temperature of at least 390°C to obtain mechanical strengths of a Young's modulus of more than 98,100 N/cm² (10,000 kg/cm²), and a matrix tensile strength of more than 10,791 N/cm² (1,100 kg/cm²).

On the other hand, the present invention provides an apparatus for manufacturing a porous polytetrafluoroethylene material from an unsintered polytetrafluoroethylene containing a liquid lubricant which is subjected to four steps, simultaneously carried out, of evaporating the lubricant, stretching the molded material in an unsintered condition, sintering the same in a stretched condition, and stretching the same in a sintered condition, said apparatus comprising a hot furnace including a double cylinder piped furnace of an inner cylinder part through which a molded material passes and an outer cylinder portion in which a heater is incorporated, said two cylinder parts being coupled to one another by the both ends thereof, means for circulating hot air through said two cylinder parts, means for detecting the furnace temperature, means for adjusting the inflow of the air at the inlet and the outlet of the furnace, means for forcibly exhausting a portion of the furnace hot air, means for supplying the molded article to the furnace, and take-up means actuated at a speed higher than the supply speed, characterized by a catalyst for facilitating oxidization of the vaporized lubricant.

## BRIEF DESCRIPTION OF THE DRAWINGS

Fig. 1 is a graph schematically representing the manner in which the temperature is raised in the furnace;

Fig. 2 shows a graph of differential thermal spectrum in the proximity of the crystalline melting point;

Fig. 3 is a schematical diagram showing the manner in which stretched tension is measured in the furnace;

Fig. 4 is a graph showing the result of measurement of the tension;

Fig. 5 is a graph showing a relation between temperature and stretching ratio of PTFE under a certain tension; and

Fig. 6 is a schematical cross-sectional view of an apparatus used to carry out the method of the invention.

## DETAILED DESCRIPTION OF THE INVENTION

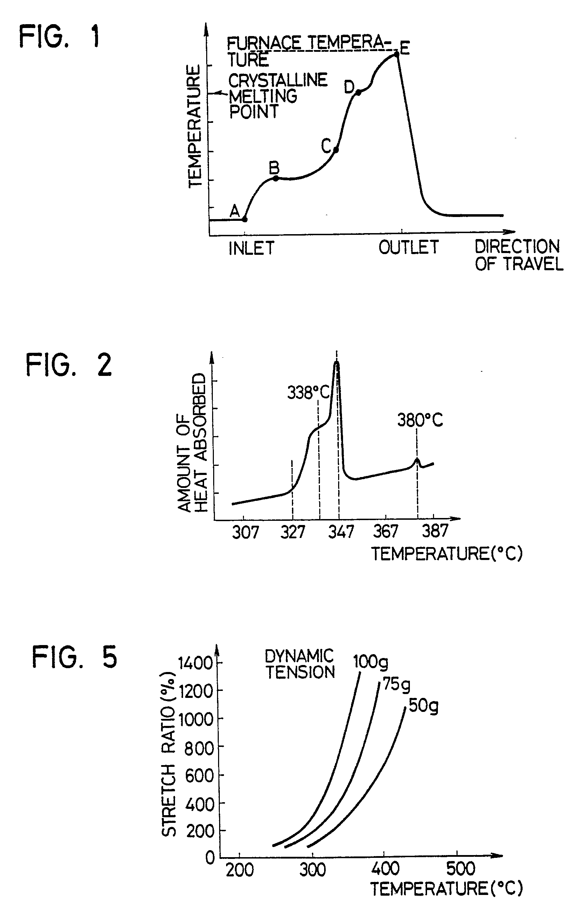

When the unsintered PTFE molded article enters into a temperature not lower than the crystalline melting point of PTFE, the temperature of molded PTFE increases with simultaneous initiation of the evaporation of the liquid lubricant, resulting in that PTFE is maintained at a temperature less than the boiling point of the liquid lubricant due to absorption of heat of vaporization. Under such condition, tension is applied to molded PTFE so that its stretching proceeds within a limited range in an unsintered condition and proceeds to increase the surface area where the liquid lubricant has been removed. Increasing the surface area facilitates the evaporation of the liquid lubricant still left in the molded article. That is, porosification and evaporation of the liquid lubricant are simultaneously achieved. After the liquid lubricant has been evaporated thoroughly, the temperature of PTFE gradually increases and sintering starts when it reaches crysalline melting point of PTFE. PTFE maintains higher viscosity at a temperature not lower than the crystalline melting point and develops a fibrous structure when stretched by tension applied from the both ends thereof. The process is schematically shown in Figs. 1 to 5. Fig. 1 shows a temperature profile in the stage where the temperature is increased. When the molded article at room temperature reaches an inlet A of the furnace, it is gradually heated and its temperature is elevated to the initial boiling point B of the liquid lubricant, where the rate of the increase in the temperature becomes to reduce due to heat of vaporization. Further, when the temperature of the molded article reaches a dry distillation point C' of lubricant, the rate of increase in the temperature is elevated and the temperature reaches the crystalline melting point of PTFE. Since the temperature of the furnace as set is further higher, the article absorbs a certain amount of heat in this crystalline melting temperature, and finally its temperature becomes closer to the temperature of the furnace.

Referring to Fig. 2 showing data of differential thermal analysis of the unsintered PTFE molded article in the proximity of crystalline melting point, the endothermic curve shows a peak at a temperature of 348°C and a shoulder at a temperature of 338°C and further a small peak in the proximity of 380°C. These peaks are depended on the crystalline structure formed when PTFE was polymerized. On the other hand, after sintering, the above-described peaks in the endothermic curve reduce but instead a sharp peak appears at a temperature of 327°C. This means that the crystalline structure is varied before and after sintering step, and it is observed that the endothermic peak is shifted to the side of high temperature when the rate of increase and decrease in the temperature is higher.

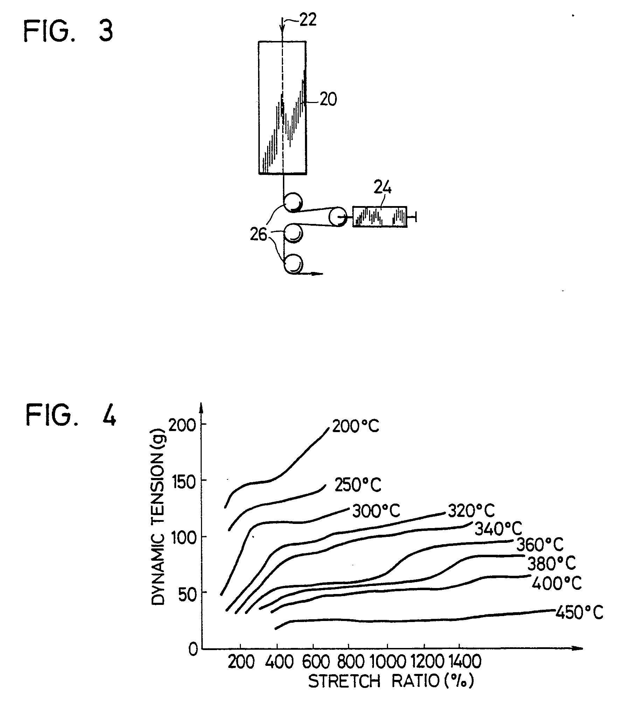

Fig. 3 is a schematical diagram showing how much tension is applied to the molded article in a steady state in the furnace where the liquid lubricant is removed by evaporation, the article is stretched in an unsintered condition, it is sintered, and it is stretched after sintering. In this instance, a tension meter using a strain gauze is coupled to a pulley to continuously record the stress loaded on the opposite ends of PTFE in the furnace.

Fig. 4 is a graph representing a dynamic tension curve when a stretch ratio is varied at a constant furnace temperature while the article is supplied to the furnace at a speed of 3 m/min. Measurements are performed at furnace temperatures ranging from 200°C to 450°C.

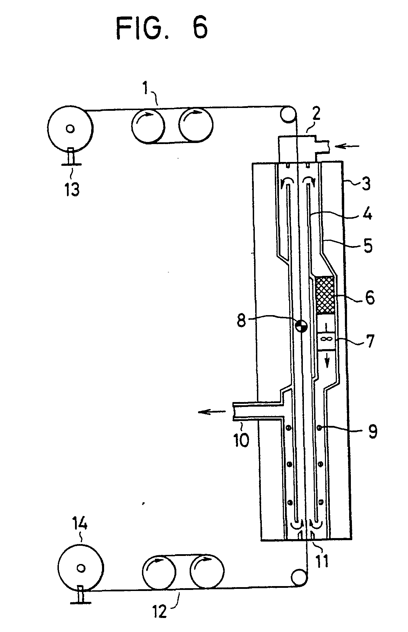

Fig. 5 is a graph showing a relation between the furnace temperature and the stretch ratio under a certain constant dynamic tension, obtained from the graph in Fig. 4.

It is understood from Fig. 5 that if the PTFE molded article containing the liquid lubricant enters into the furnace as shown in Fig. 1 under conditions under which, for example, dynamic tension is exerted to load the article a stress of 100 g, little stretching occurs between the points A and B in Fig. 1 but stretching of not exceeding about 100% occurs at the point C at about 250°C. However, the article is subjected to a higher temperature as high as up to about 350°C between the points C and D and then stretched up to 800%. Between the points D and E, if the upper limit of the furnace temperature set is, for example, 400°C, stretching of not lower than 1400% is achieved simultaneously with the sintering. It is, of course, a normal procedure to predetermine the stretch ratio at the top and the bottom of the furnace so that the dynamic tension is varied according to that ratio and the stretch ratios shown at various temperatures are changed accordingly. However, it has been discovered during repeated tests that when the furnace temperature was set, for example, 400°C in excess of the endothermic peak shown in Fig. 2 (380°C), the porous PTFE material had greater mechanical properties, particularly, Young's modulus and matrix tensile strength. More specifically, the furnace temperature which was set at 380°C or less may not satisfy either Young's modulus of not lower than 98,100 N/cm$^2$ (10,000 kg/cm$^2$) or matrix tensile strength of not lower than 10,791 N/cm$^2$ (1,100 kg/cm$^2$). However, the furnace temperature set at 390°C or more may satisfy both the requirements, and the self-supported porous PTFE material may be obtained convenient to handle.

It is also confirmed that the PTFE molded article not containing a liquid lubricant is not qualified to satisfy Young's modulus of not lower than 98,100 N/cm$^2$ (10,000 kg/cm$^2$) and matrix tensile strength of not lower than 10,791 N/cm$^2$ (1100 kg/cm$^2$) when supplied to the furnace.

Although the physical background of the method according to the invention is still unclear, it is believed, though not sticked to, that the phenomenon relates to a rate of temperature increase till a temperature above the endothermic peak is reached and the rate of temperature decrease once such a high temperature is reached.

The method of the present invention may be suitably applicable to the various articles in the form of a film, tube or rod.

Liquid lubricants which can be mixed with PTFE include those which are capable of wetting the surface of PTFE and capable of being evaporated at a temperature not higher than the melting temperature of PTFE.

Preferred lubricants include those having a boiling point not higher than 260°C, which may be suitably used as they are readily evaporated from the molded article. Generally, petroleum hydrocarbons are used as they are easy to handle and reasonable in price.

The furnace temperature at which the method of the invention is carried out must be at least 390°C. Although the crystalline melting point of PTFE is 347°C, it is required to use a temperature exceeding the crystalline melting point if it is desired to satisfy higher Young's modulus and matrix tensile strength.

On the other hand, the furnace temperature affects the rate of increase in the temperature of PTFE molding. More specifically, as the furnace temperature is increased to more than 450°C or 500°C, simultaneous operation of removal of the liquid lubricant, stretching and sintering of PTFE can be carried out at a higher speed. According to the present invention, it has now been confirmed that the method may be carried out so long as the temperature distribution within the furnace is controlled within the range of not more than 30°C. The higher the furnace temperature, the more accurate the temperature distribution. The higher accuracy of temperature allows PTFE to be predetermined high speed, homogeneous heating and cooling. With low accuracy, fluctuations are observed in melting of crystals and recrystallization, which tend to cause micro-breakage during the treatment and result in fluctuations in the physical properties of the porous material. According to the present invention, it has been found that the oven which is adopted to circulate a hot air at a high speed to homogenize the furnace temperature distribution is well suitable for heat means which controls the temperature with high accuracy in the high temperature atmosphere. Further, it has been also discovered that incorporation into the furnace, of a catalyst which facilitates oxidization of evaporated lubricant lessens a solvent concentration in the furnace atmosphere to maintain it below explosion limit, and that thermal energy by combustion is used to the best advantage so that energy cost is greatly deducted. Since the higher a circulating wind velocity is, the better the temperature distribution accuracy is improved in the furnace, more than 5 m/sec wind velocity is preferable in a working temperature and 10—40 m/sec wind velocity is more preferable. The velocity may be changed according to the shape of the molded article.

Next, an apparatus will be described hereinafter into which the invention is well embodied.

The basic structure of the apparatus is shown as in Fig. 6 and includes heat means, and supply and take-up means (12) for the molded article. Heat means is a circulating hot air system. To this end, a double-cylinder piped furnace 3 employed wherein the molded article passes through an inner cylinder portion 4 and a heater 9 is incorporated into an outer cylindrical portion 5. These two cylindrical portions are in connection with one another, and a hot air in the furnace is circulated at a constant flow rate by a fan 7. The furnace temperature is detected by a thermocouple 8 or the like disposed within the inner cylindrical portion at the center and is fed back by the heater for temperature control. The furnace temperature is influenced by an inflow of the air from the furnace inlet and outlet as well as a supplied speed of molded articles and combustion caloric energy of the lubricant.

A pressure box 2 at the furnace inlet and a nozzle 11 at the outlet are arranged to provide an adjustable mechanism which controls inflow of the air. A portion of the air in the furnace is forcibly discharged by an exhaust pipe 10 to maintain oxygen concentration required for combustion in the furnace.

Catalysts 6 are mounted on one or more places where the hot air is circulated. A platinum group catalyst is one of the catalysts having excellent oxidizing capacity and is suitably used for the purpose of the invention.

Means for supplying 1 and taking-up 12 the molded article will be described hereinafter. Basically, a take-up portion is required to be driven at a speed higher than the supply speed, since a stretching operation is interposed. When the molded article is, for example, a film, means is preferably in the form of a roll. When the molded article is a tube or a rod, means is preferably in the form of a pair of capstans with a

4

groove to conform to the outer diameter. In addition a guide roll, a supply stand 13, take-up machine 14 or various detectors are arranged as the case may be.

Example 1

A liquid lubricant naphtha No. 5 (manufactured by Shell Petroleum Co.; boiling range 152—197°C) with 25 parts by weight was mixed with a PTFE fine powder F104 (manufactured by Daikin Kogyo Co., Ltd.) with 100 parts by weight and then extruded to a tube of the outer diameter of 3 mm, the inner diameter of 2 mm by a ram extruder. Next, the tube was subjected to simultaneous treatments such as removal of the lubricant and stretching, sintering the tube as shown in Table 1 at the temperature ranging from 350—520°C by the use of the apparatus shown in Fig. 6. As a result, a homogeneous porous tube was obtained in either case. The lubricant was fully evaporated and removed. An extracted residue (the tube was extracted in acetone to measure weight decrease before and after extraction) was shown less than 0.1 weight % in either case. Table 2 shows properties of porous tubes obtained, wherein strength characteristics of the tube obtained at the furnace temperature of more than 390°C are matrix strength of 10,797 N/cm$^2$ (1,100 kg/cm$^2$) and Youngs modulus of more than 98,100 N/cm$^2$ (10,000 kg/cm$^2$). On the other hand, the tube obtained at the atmospheric temperature of 360°C results in that one of the value of either matrix tensile strength or Young's modulus is less than the afore-mentioned limit.

Table 1

Test Condition

| Test No. | Furnace Temperature (°C) | Supply Speed (m/min.) | Take-up Speed (m/min.) | Stretching Ratio (%) |
|----------|--------------------------|-----------------------|------------------------|----------------------|
| 1 | 360 | 1.5 | 6.0 | 300 |
| 2 | 400 | 3.0 | 6.0 | 100 |
| 3 | 400 | 3.0 | 12.0 | 300 |
| 4 | 420 | 3.5 | 38.5 | 1000 |
| 5 | 520 | 7.0 | 28.0 | 300 |
| 6 | 360 | 2.0 | 22.0 | 1000 |

## Table 2

### Characteristics of Porous Tube

| Test No. | Dimensions | | Property of Matter | | | | | | |
|---|---|---|---|---|---|---|---|---|---|
| | Outer Dia. | Inner Dia. | Porosity | Bubbling Point | | Matrix Tensile Strength | | Young's Modulus | |
| | (mm) | (mm) | (%) | hPa | (kg/cm²) | N/cm² | (kg/cm²) | N/cm² | (kg/cm²) |
| 1 | 2.2 | 1.5 | 65 | 313.6 | (0.32) | 8,093 | (825) | 78,480 | (8000) |
| 2 | 2.3 | 1.7 | 42 | 1,176 | (1.20) | 11,281 | (1150) | 103,005 | (10500) |
| 3 | 2.2 | 1.6 | 68 | 421.4 | (0.43) | 13,145 | (1340) | 107,970 | (11000) |
| 4 | 2.3 | 1.7 | 82 | 176.4 | (0.18) | 12,164 | (1240) | 137,340 | (14000) |
| 5 | 2.4 | 1.9 | 76 | 215.6 | (0.22) | 11,772 | (1200) | 196,200 | (20000) |
| 6 | 2.1 | 1.6 | 86 | 133.6 | (0.15) | 11,281 | (1150) | 68,670 | (7000) |

* Calculation is made according to the following formula

$$FM = FR \times \frac{2.2}{dR}$$

wherein FM: matrix tensile strengh $kg/mm^2$,

FR: actual tensile strength of porous sample $kg/mm^2$,

dR: apparent specific density of porous sample.

### Example 2

A liquid lubricant naphtha No. 5 with 26 parts by weight was mixed with a PTFE fine powder F104 with 100 parts by weight and then extruded to give a rod of the outer diameter of 25 mm by a ram extruder. The rod was further rolled out to a film having the width of 650 mm and the thickness of 0.25 mm. The film was subjected to simultaneous treatments such as removal of the lubricant and stretching, sintering the film under a condition as shown in Table 3 by the use of the apparatus having a supply stand, a guide roll, and a take-up machine suitable for the film. Characteristics of the porous film as obtained are shown in Table 4 from which it is understood that the film is obtained with a higher strength and sufficient permeability.

## Table 3

### Test Condition

| Test No. | Furnace Temperature (°C) | Supply Speed (m/min.) | Take-up Speed (m/min.) | Stretching Ratio (%) |
|---|---|---|---|---|
| 7 | 350 | 2.0 | 12.0 | 500 |
| 8 | 400 | 4.0 | 12.0 | 200 |
| 9 | 400 | 4.0 | 24.0 | 500 |
| 10 | 400 | 4.0 | 44.0 | 1000 |
| 11 | 540 | 10.0 | 30.0 | 200 |
| 12 | 540 | 10.0 | 60.0 | 500 |
| 13 | 350 | 3.0 | 33.0 | 1000 |

## Table 4

| | | Characteristics of Porous Film | | | | | |
|---|---|---|---|---|---|---|---|
| Test No. | Dimension Film Thickness (mm) | Porosity (%) | Permeability (Gurley sec.) | Matrix Tensile Strength in Longitudinal Direction N/cm² | (kg/cm²) | Young's Modulus N/cm² | (kg/cm²) |
| 7 | 0.19 | 71.7 | 4.1 | 11,772 | (1200) | 73,575 | (7500) |
| 8 | 0.21 | 46.5 | 48.2 | 10,987 | (1120) | 107,910 | (11000) |
| 9 | 0.20 | 72.1 | 6.5 | 11,281 | (1150) | 106,929 | (10900) |
| 10 | 0.19 | 84.7 | 2.0 | 13,341 | (1360) | 127,530 | (13000) |
| 11 | 0.19 | 68.5 | 9.4 | 12,458 | (1270) | 147,150 | (15000) |
| 12 | 0.18 | 80.0 | 4.5 | 14,322 | (1460) | 166,770 | (17000) |
| 13 | 0.17 | 89.0 | 1.5 | 11,772 | (1200) | 63,765 | (6500) |

For production of the PTFE porous materials, the three individual steps or processes have been heretofore required such as removal of the liquid lubricant, and stretching and sintering of the molded article to obtain the porous materials from the paste extruded materials. According to the present invention, these three steps are performed simultaneously at one step, whereby process instrument, time and energy and labor are greatly reduced.

**Claims**

1. A method for manufacturing a porous polytetrafluoroethylene material comprising extruding and/or rolling an unsintered polytetrafluoroethylene mixture containing a liquid lubricant, and next carrying out the steps of a) evaporating the liquid lubricant, b) stretching the molded articles in an unsintered condition,

7

and c) sintering the same in a stretched condition, characterized in that the above-mentioned steps a)—c) are carried out simultaneously, that there is an additional simultaneous step of d) stretching the molded articles in a sintered condition and that all steps a)—d) are carried out at an atmospheric temperature of at least 390°C to obtain mechanical strengths of a Young's modulus of more than 98,100 N/cm$^2$ (10,000 kg/cm$^2$), and a matrix tensile strength of more than 10,791 N/cm$^2$ (1,100 kg/cm$^2$).

2. The method as described in claim 1, characterized in that the control of the atmospheric temperature at which the four steps a)—d) are simultaneously carried out, is made by a circulating hot air oven at a wind velocity of more than 5 m/sec, and that the evaporated lubricant is burned by an oxidizing catalyst.

3. The method as described in claim 1, characterized in that the molded articles are in the form of either a film, tube or a rod.

4. The method as described in claim 1, characterized in that the lubricant has a boiling range of less than 260°C.

5. The method as described in claim 1, characterized in that the atmospheric temperature at which the four steps a)—d) are simultaneously carried out is more than 450°C, and that the furnace temperature distribution is less than 30°C.

6. The method as described in claim 1, characterized in that the atmospheric temperature at which the four steps a)—d) are simultaneously carried out is more than 500°C, and that the furnace temperature distribution is less than 30°C.

7. An apparatus for manufacturing a porous polytetrafluoroethylene material from an unsintered polytetrafluoroethylene containing a liquid lubricant which is subjected to four steps, simultaneously carried out, of evaporating the lubricant, stretching the molded material in an unsintered condition, sintering the same in a stretched condition, and stretching the same in a sintered condition, said apparatus comprising a hot furnace (3) including a double cylinder piped furnace of an inner cylinder part (4) through which a molded material passes and an outer cylinder portion (5) in which a heater (9) is incorporated, said two cylinder parts being coupled to one another by the both ends thereof, means (7) for circulating hot air through said two cylinder parts, means (8) for detecting the furnace temperature, means (2, 11) for adjusting the inflow of the air at the inlet and the outlet of the furnace, means (10) for forcibly exhausting a portion of the furnace hot air, means (1) for supplying the molded article to the furnace, and take-up means (12) actuated at a speed higher than the supply speed, characterized by a catalyst (6) for facilitating oxidization of the vaporized lubricant.

**Patentansprüche**

1. Verfahren zur Herstellung eines porösen Polytetrafluoroethylenmaterials, umfassend das Extrudieren und/oder Walzen einer ungesinterten Polytetrafluorethylenmischung, enthaltend ein flüssiges Gleitmittel, und danach die Durchführung der Stufen

a) Verdampfen des flüssigen Gleitmittels,

b) Strecken der geformten Gegenstände in ungesintertem Zustand und

c) Sintern derselben in einem gestreckten Zustand, dadurch gekennzeichnet, daß die oben genannten Stufen a)—c) gleichzeitig ausgeführt werden, daß eine weitere gleichzeitige Stufe

d) Strecken der geformten Gegenstände in gesintertem Zustand eingeschlossen ist und daß alle Stufen a)—d) bei einer Umgebungstemperatur von mindestens 390°C durchgeführt werden, um mechanische Festigkeiten bezüglich einem Young-Modul von mehr als 98100 N/cm$^2$ (10000 kg/cm$^2$) und eine Matrix-Zugfestigkeit von mehr als 10791 N/cm$^2$ (1100 kg/cm$^2$) zu erhalten.

2. Verfahren nach Anspruch 1, dadurch gekennzeichnet, daß die Regulierung der Umgebungstemperatur, bei der die vier Stufen a)—d) gleichzeitig durchgeführt werden, mittels einem Zirkulations-Heißluftofen bei einer Windegeschwindigkeit von mehr als 5 m/sec durchgeführt wird und daß das verdampfte Gleitmittel mittels einem Oxidationskatalysator verbrannt wird.

3. Verfahren nach Anspruch 1, dadurch gekennzeichnet, daß die geformten Gegenstände die Form entweder eines Films, einer Röhre oder eines Stables besitzen.

4. Verfahren nach Anspruch 1, dadurch gekennzeichnet, daß das Gleitmittel einen Siedebereich von weniger als 260°C besitzt.

5. Verfahren nach Anspruch 1, dadurch gekennzeichnet, daß die Umgebungstemperatur, bei der die vier Stufen a)—d) gleichzeitig durchgeführt werden, mehr als 450°C beträgt und daß die Ofentemperaturverteilung weniger als 30°C beträgt.

6. Verfahren nach Anspruch 1, dadurch gekennzeichnet, daß die Umgebungstemperatur, bei der die vier Stufen a)—d) gleichzeitig durchgeführt werden, mehr als 500°C beträgt und daß die Ofentemperaturverteilung weniger als 30°C beträgt.

7. Vorrichtung zur Herstellung eines porösen Polytetrafluorethylenmaterials aus einem ungesinterten Polytetrafluorethylen, enthaltend ein flüssiges Gleitmittel, das den vier gleichzeitig durchgeführten Stufen des Verdampfens des Gleitmittels, Streckens des geformten Materials in ungesintertem Zustand, Sintern desselben in gestrecktem Zustand und Strecken desselben in ungesintertem Zustand unterzogen wird, wobei die Vorrichtung umfaßt: einen Heizofen (3) einschließlich einem Doppelzylinder-Röhrenofen aus einem inneren Zylinderteil (4), durch den ein geformtes Material hindurchgeführt wird und einem äußeren Zylinderteil (5), in den eine Heizeinrichtung (9) eingebracht ist, wobei die zwei Zylinderteile durch ihre

# EP 0 155 337 B1

beiden Enden miteinander verbunden sind, eine Einrichtung (7) zur Zirkulation von Heißluft durch die zwei Zylinderteile, eine Einrichtung (8) zur Feststellung der Ofentemperatur, Einrichtungen (2, 11) zur Enregulierung der Lufteinströmung am Einlaß und Auslaß des Ofens, eine Einrichtung (10) zum erzwungenen Abführen eines Teils der Ofen-Heißluft, eine Einrichtung (1) zur Zuführung des geformten Gegenstands zu dem Ofen und eine Aufnahmeeinrichtung (12), die mit einer höheren Geschwindigkeit als die Zuführungsgeschwindigkeit betrieben wird, gekennzeichnet durch einen Katalysator (6) zur Erleichterung der Oxidation des verdampften Gleitmittels.

## Revendications

1. Un procédé de fabrication d'un matériau de polytétrafluoroéthylène poreux comprenant l'extrusion et/ou le laminage d'un mélange de polytétrafluoroéthylène non fritté contenant un lubrifiant liquide et ensuite la conduit des étapes a) d'évaporation du lubrifiant liquide, b) d'étirage des articles moulés à l'état non fritté, et c) de frittage de ces articles à l'état étiré, caractérisé en ce que les étapes a)—c) mentionnées ci-dessus sont conduites simultanément et qu'il y a une étape simultanée additionnelle d) d'étirage des articles moulés à l'état fritté et en ce que la totalité des étapes a)—d) est conduite à une température atmosphérique d'au moins 390°C pour obtenir des résistances mécaniques comprenant un module de Young supérieur à 98 100 N/cm$^2$ (10 000 kg/cm$^2$), et une résistance à la traction de matrice supérieure à 10 791 N/cm$^2$ (1 100 kg/cm$^2$).

2. Le procédé selon la revendication 1, caractérisé en ce que le contrôle de la température atmosphérique à laquelle les quatre étapes a)—d) sont conduites simultanément est fait par circulation d'air chaud dans un four à une vitesse de vent supérieure à 5 m/s, et que le lubrifiant évaporé est brûlé par un catalyseur d'oxydation.

3. Le procédé selon la revendication 1, caractérisé en ce que les articles moulés sont sous la forme d'un film, d'un tube ou d'une tige.

4. Le procédé selon la revendication 1, caractérisé en ce que le lubrifiant a un intervalle d'ébullition inférieur à 260°C.

5. Le procédé selon la revendication 1, caractérisé en ce que la température atmosphérique à laquelle les quatre étapes a)—d) sont conduites simultanément est supérieure à 450°C et que la distribution de température du four est inférieure à 30°C.

6. Le procédé selon la revendication 1, caractérisé en ce que la température atmosphérique à laquelle les quatre étapes a)—d) sont conduites simultanément est supérieur à 500°C, et que la distribution de température du four est inférieur à 30°C.

7. Un appareil pour la fabrication d'un matériau de polytétrafluoroéthylène poreux à partir d'un polytétrafluoroéthylène non fritté contenant un lubrifiant liquide qui est soumis à quatre étapes, conduites simultanément, d'évaporation du lubrifiant, d'étirage du matériau moulé à l'état non fritté, de frittage du matériau à l'état étiré, et d'étirage du matériau à l'état fritté, ledit appareil comprenant un four chaud (3) incluant un four à double cylindre comportant une partie cylindrique intérieure (4) à travers laquelle passe le matériau moulé et une portion cylindrique extérieure (5) dans laquelle est incorporé un dispositif de chauffage (9), ces deux parties cylindriques étant couplées l'une à l'autre par leurs deux extrémités, un dispositif (7) pour faire circuler de l'air chaud à travers ces deux parties cylindriques, un dispositif (8) pour détecter la température du four, un dispositif (2, 11) pour ajuster le courant d'air entrant à l'orifice d'entrée et à l'orifice de sortie du four, un dispositif (10) pour évacuer en force une portion de l'air chaud du four, un dispositif (1) pour alimenter l'article moulé dans le four, et un dispositif d'enlèvement (12) actionné à une vitesse supérieure à la vitesse d'alimentation, caractérisé par un catalyseur (6) pour faciliter l'oxydation du lubrifiant vaporisé.

FIG. 1

FIG. 2

FIG. 5

1

FIG. 3

FIG. 4

# FIG. 6